# EUROPEAN PATENT SPECIFICATION

(11) **EP 2 688 389 B1**
(45) Date of publication and mention of the grant of the patent: **13.05.2015**
(21) Application number: 12709809.3
(22) Date of filing: 20.03.2012
(51) Int. Cl.: A01D 46/26, A01D 46/28

(54) **GRAPE HARVESTER, PARTICULARLY FOR PICKING GRAPES FROM PERGOLA OR TENDONE TRELLIS**
TRAUBENERNTEMASCHINE, INSBESONDERE ZUR AUFNAHME VON TRAUBEN AUS PERGOLA- ODER RANKGITTERANBAU
MACHINE À VENDANGER, EN PARTICULIER POUR CUEILLIR DES RAISINS SUR UNE PERGOLA OU UNE TREILLE

(30) Priority: 22.03.2011 IT VI20110063
(43) Date of publication of application: 29.01.2014
(73) Proprietor: CRM Di Dal Maso Carlo Ed Eugenio S.N.C., 36054 Montebello Vicentino (Vicenza) (IT)
(72) Inventor: DAL MASO, Carlo, 36054 Montebello Vicentino (Vicenza) (IT); DAL MASO, Eugenio, 36054 Montebello Vicentino (Vicenza) (IT)
(74) Representative: Forattini, Amelia
(86) International application number: PCT/EP2012/001221
(87) International publication number: WO 2012/126610

(56) References cited:
- EP-A1- 1 862 059
- WO-A1-2006/103554
- WO-A1-2010/040825
- FR-A1- 2 255 841
- FR-A1- 2 514 227
- FR-A2- 2 408 291
- GB-A- 2 013 465
- US-A- 4 860 529
- US-A- 5 355 667

## Description

The present invention relates to a grape harvester, particularly for picking grapes from traditional Italian pergola or "tendone" trellis.

As is known, grape picking is quite probably the most challenging, pressing and onerous cultivation operation to be performed in a vineyard.

In this regard, various types of machine for mechanized grape picking have been devised for detaching the individual grapes, separating them from the leaves and from the bunches, and transporting the picked product.

Structurally, conventional grape harvesters may differ according to the picking system used and according to the type of cultivation of the vineyard for which they are conceived.

Machines for picking grapes from pergola or "tendone" trellis generally have two different systems for separating the grapes from the bunches.

A first type of picking apparatus is constituted by a series of vibrating combs arranged above a frame which also supports the reservoir for the picked product.

The combs are formed by rods made of synthetic material which are arranged along multiple rows at right angles to the row of vines and oscillate in the direction of advancement of the machine.

Adapted mechanisms allow the rods to rise and descend alternatively so as to strike the bunches and cause their separation.

The second type of picking apparatus is constituted by a series of pulsating cylinders provided with long appendages made of synthetic material.

The cylinders are arranged at right angles to the row of vines and are free to rotate during advancement, thereby providing a combing effect on the vegetation and causing the separation of the bunches.

The conventional grape harvesters are advantageous in many respects and substantially achieve the intended purpose, however those harvesters also have limitations due in particular to the considerable loss of product, which is constituted mainly by the grapes left on the plant.

It should in fact be noted that conventional machines have an estimated picking loss which is substantially three times that of manual harvesting.

Also, in the production of quality wine, it is important to be able to make wine starting from grapes in perfect condition.

In this regard, it is evident that the presence of foreign materials and the high degree of mashing that generally characterizes grapes picked with conventional machines, have considerable negative effects on the chemical and organoleptic composition of the wine.

Not least, it should be considered that the conventional harvesting machines tend to cause considerable damage to the vine shoots and in some cases to the supporting structures as well.

**USS355667 discloses a single head grape and raisin harvester having a single driven oscillating shaker head mounted on a sub-frame enabling-the shaker head to center itself on the row of grape vines being harvested.**

The aim of the present invention is to solve the problems described above, providing a grape harvester, particularly for picking grapes from pergola or tendone trellis, which is capable of minimizing picking losses.

Within the scope of this aim, a particular object of the invention is to provide a grape harvester that is able to preserve the integrity and quality of the picked grapes.

Another object of the invention is to provide a grape harvester that does not damage the shoots or their supporting frames.

A further object of the invention is to provide a grape harvester that allows to significantly shorten the picking times, preserving the organoleptic characteristics of the product.

A further object of the invention is to provide a grape harvester that can also be used for other forms of cultivation such as for example Trento pergola, GDC, Guyot and Cordon.

This aim, as well as these and other objects which will become better apparent hereinafter, are achieved by a grape harvester, particularly for picking grapes from pergola or tendone trellis, **as claimed in the appended claims.**

Further characteristics and advantages will become better apparent from the description of a preferred but not exclusive embodiment of a grape harvester according to the invention, illustrated by way of non-limiting example in the accompanying drawings, wherein:

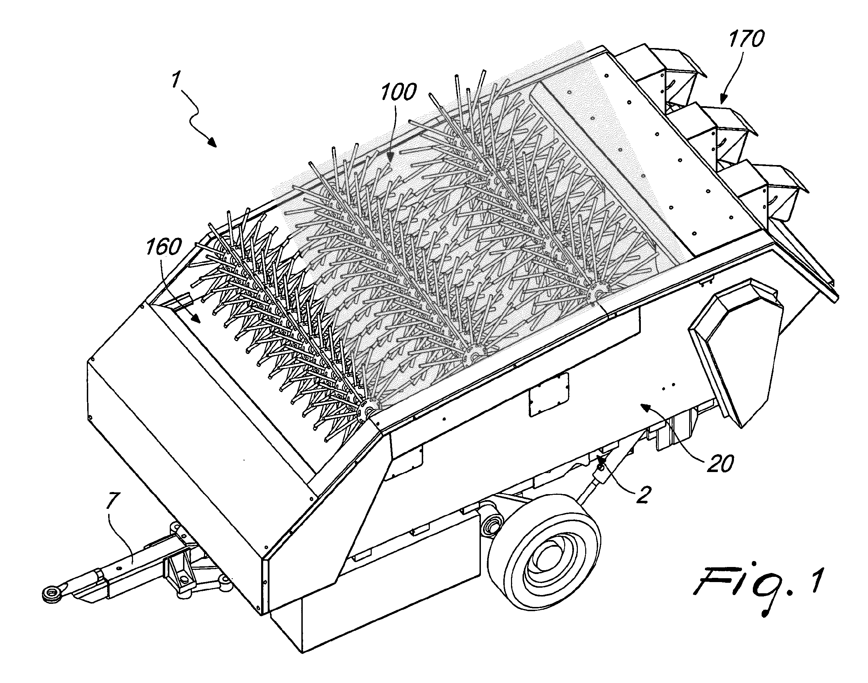

Figure 1 is a perspective view of a grape harvester according to the invention;

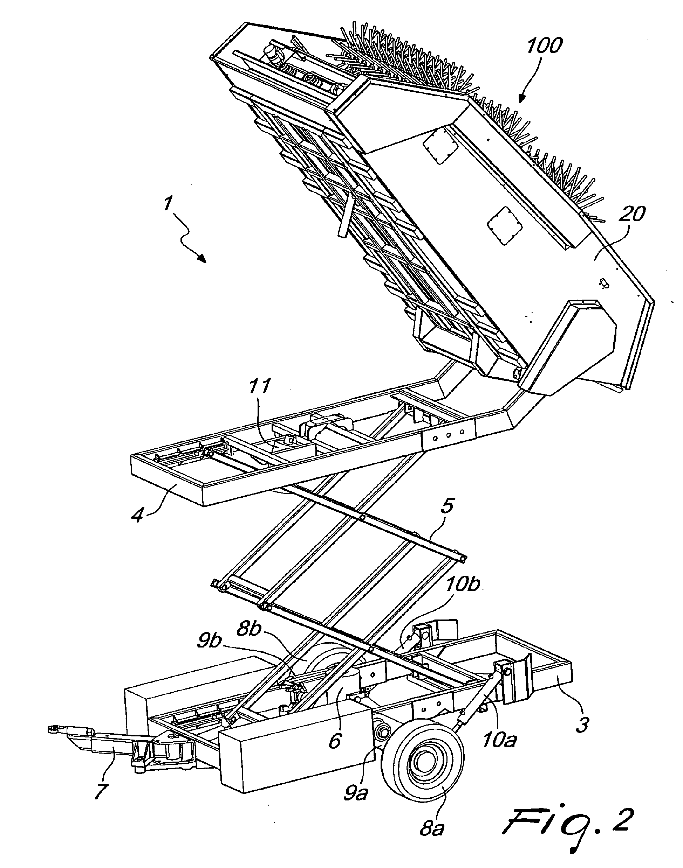

Figure 2 is another perspective view of the grape harvester according to the invention;

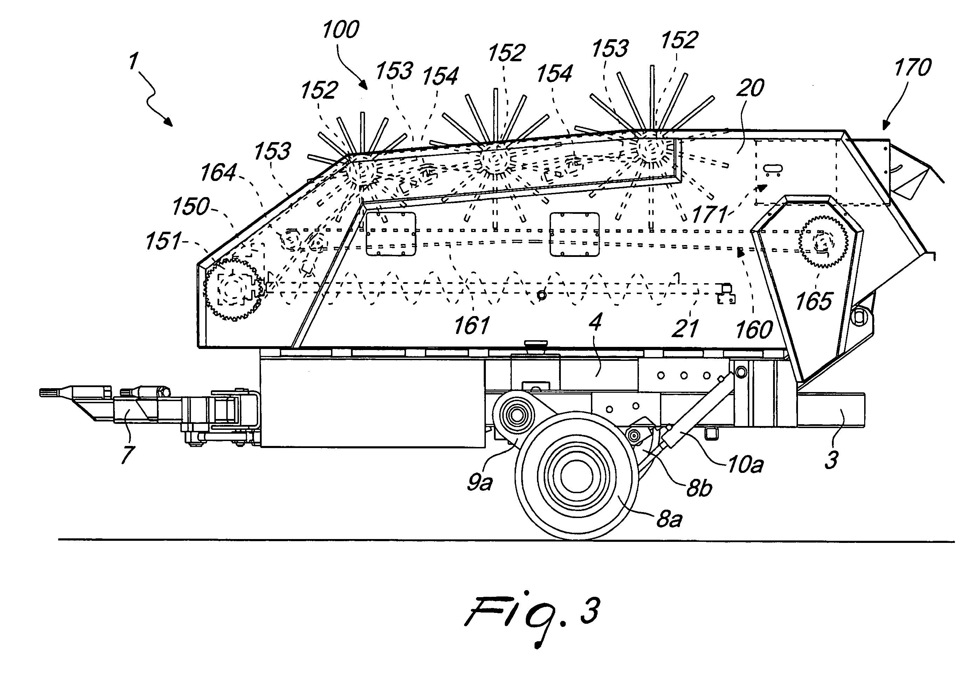

Figure 3 is a side view of the grape harvester according to the invention:

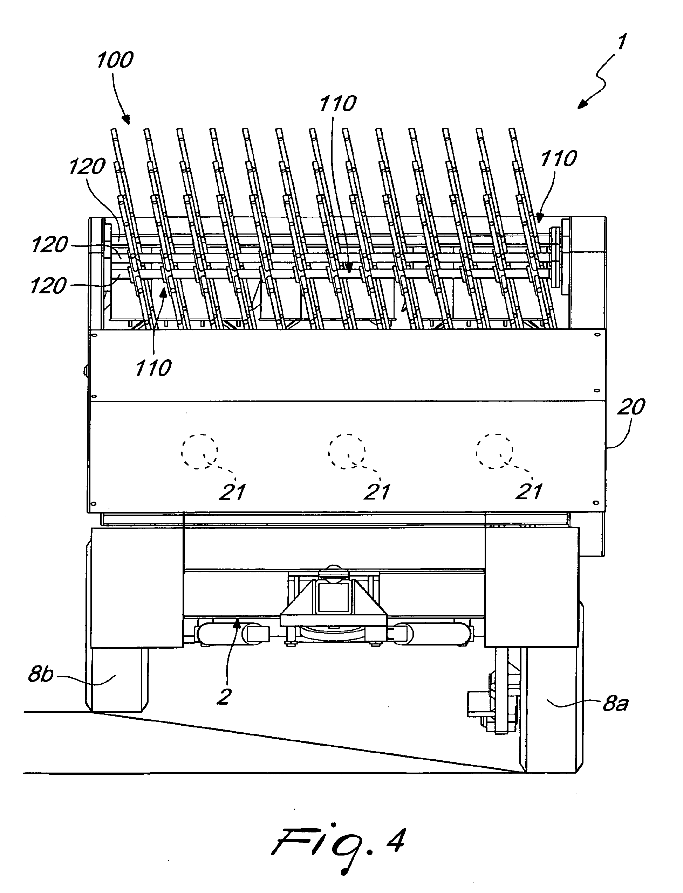

Figure 4 is a front view of the grape harvester according to the invention;

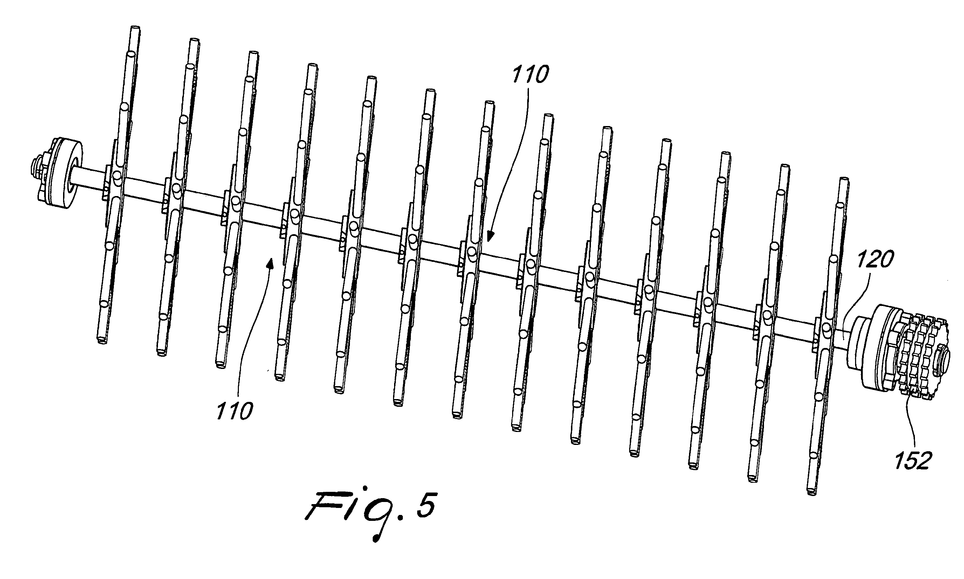

Figure 5 is a perspective view of a component of the grape harvester according to the invention;

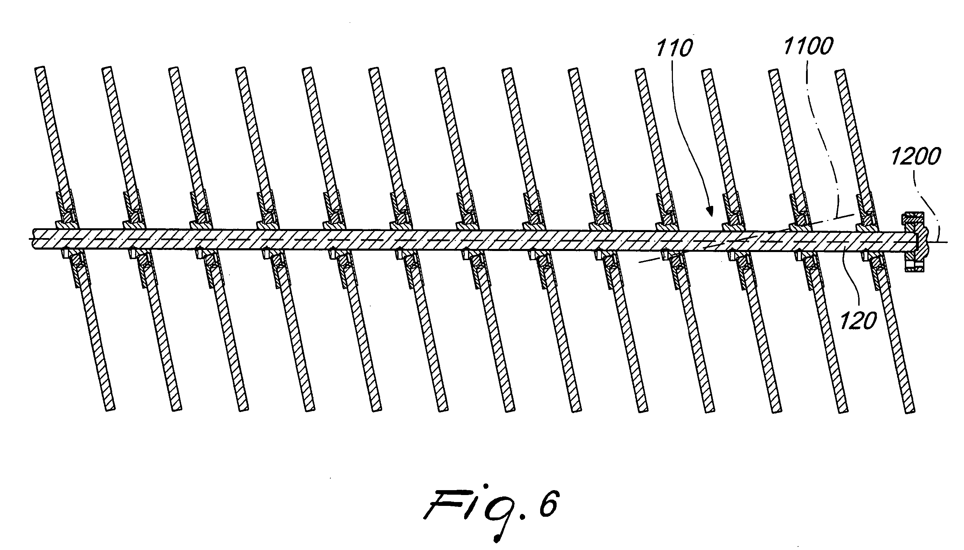

Figure 6 is a sectional front view of the component of the preceding figure;
Figure 7 is a front view of another component of the grape harvester according to the invention;
Figure 8 is a sectional view of Figure 7, taken along the plane VIII-VIII;
Figure 9 is an exploded view of the component of Figures 7 and 8;

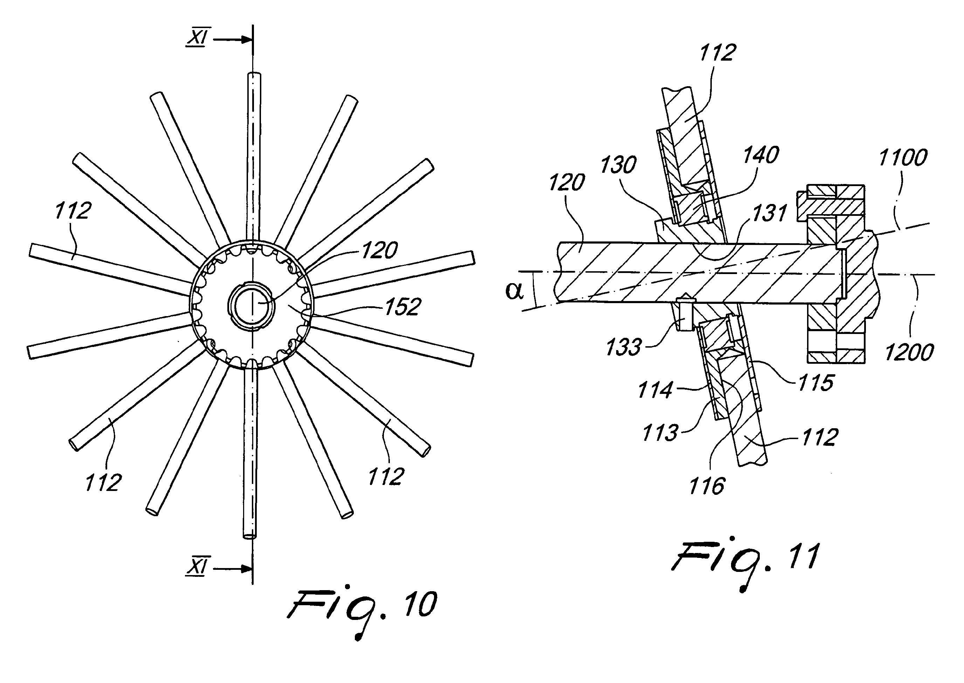

Figure 10 is another front view of the component of Figures 7 to 9;
Figure 11 is a sectional view of Figure 10, taken along the plane XI-XI;

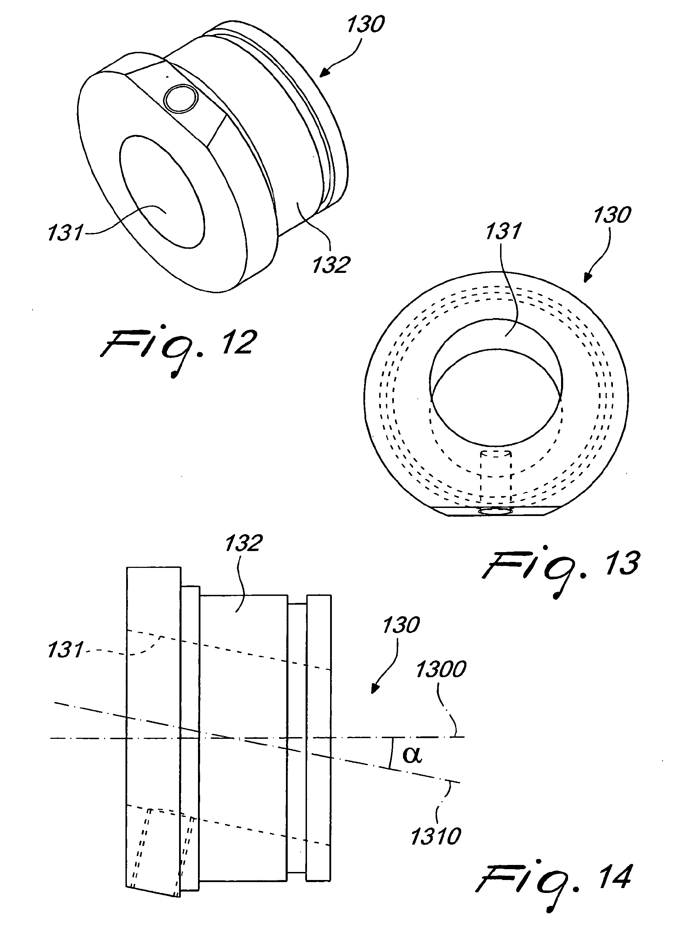

Figure 12 is a perspective view of another component of the grape harvester according to the invention;
Figure 13 is a front view of a component of the preceding figure;
Figure 14 is a side view of the component of Figures 12 and 13;

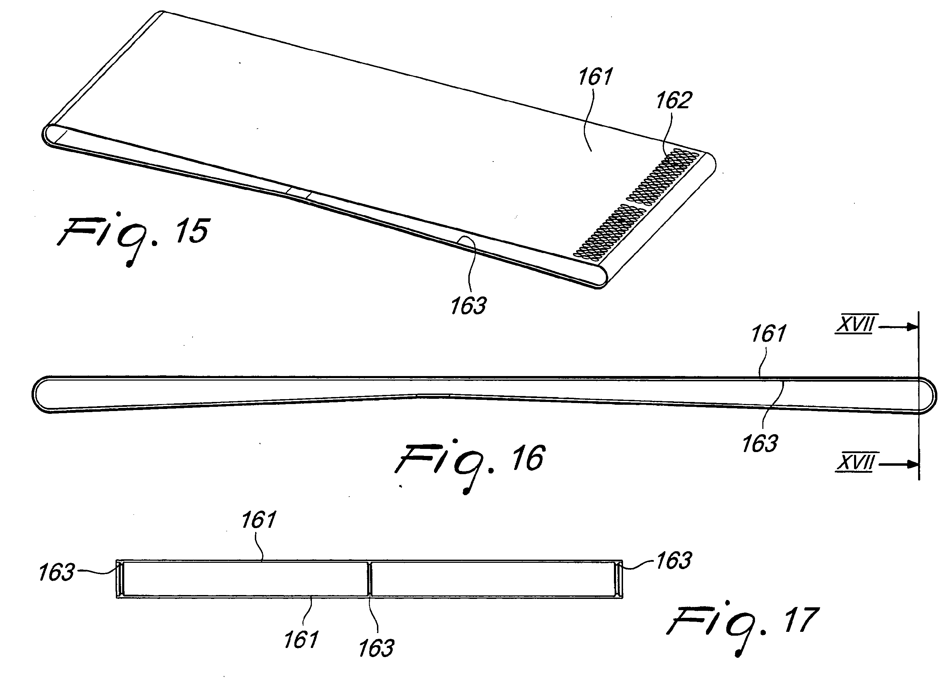

Figure 15 is a perspective view of another component of the grape harvester according to the invention;
Figure 16 is a side view of the component of the preceding figure;
Figure 17 is a sectional view of Figure 16, taken along the plane XVII-XVII;

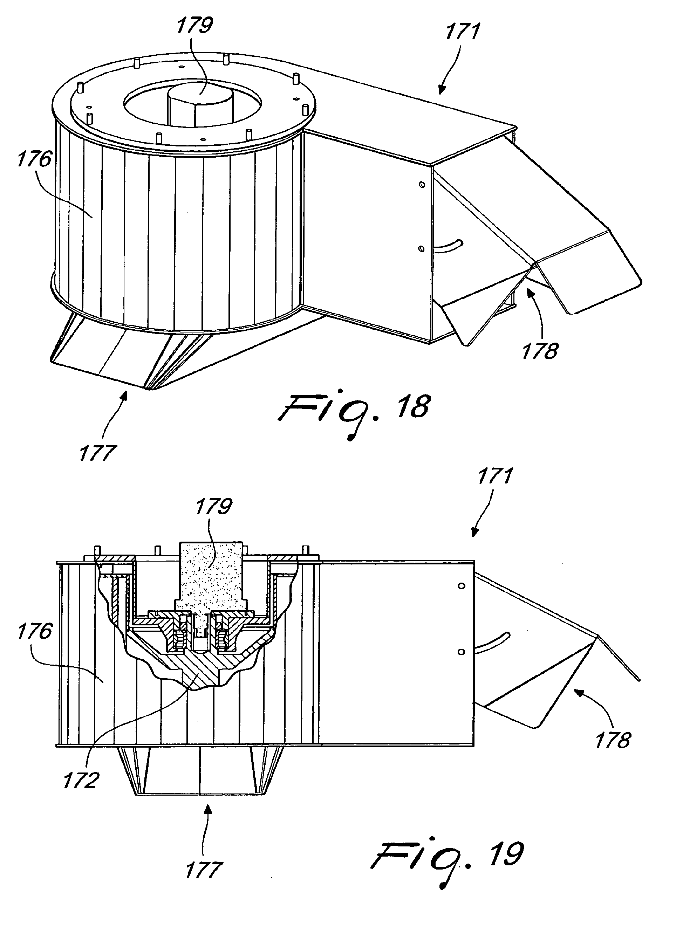

Figure 18 is a perspective view of another component of the grape harvester according to the invention;
Figure 19 is a side view of the component of the preceding figure;

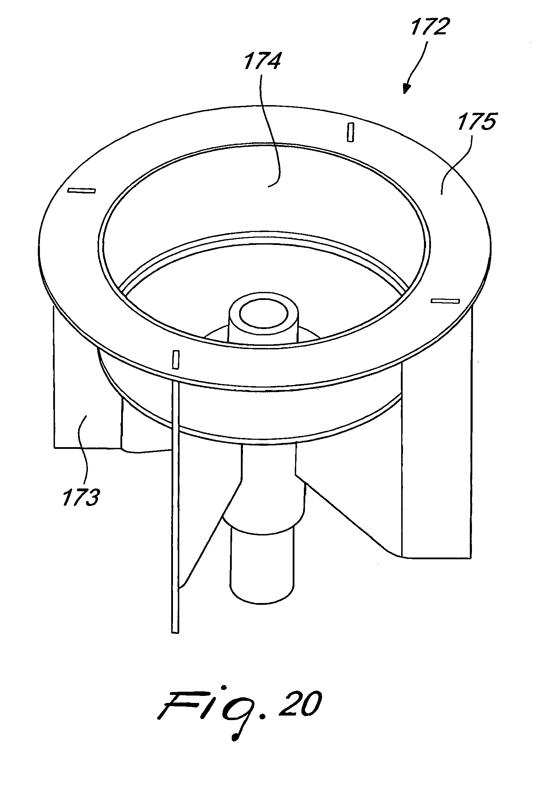

Figure 20 is a perspective view of another component of the grape harvester according to the invention.

With reference to the cited figures, a grape harvester, particularly for picking grapes from pergola or tendone trellis, is generally designated by the reference numeral 1.

The grape harvester 1 comprises a picking assembly 100 which is arranged at the front part of a chassis 2 and preferably above a reservoir 20 for receiving the individual grapes.

According to a preferred embodiment, the chassis 2 comprises a lower portion 3 and an upper portion 4, that are joined by means of a pantograph lifting device 5 operated by one or more hydraulic jacks 6.

The lower portion 3 comprises an advancement means, constituted by a drawbar 7, which is joined to the front part of the grape harvester 1.

Wheels 8a and 8b are mounted under the chassis 2.

While the drawbar 7 is preferably rotatable, the wheels 8a and 8b are assisted by lifting means which allow the grape harvester 1 to adapt to the variable conditions of the ground and of the vineyard, i.e., to adapt the height and inclination of the picking assembly 100, so as to keep it substantially in contact with the productive region.

The wheels 8a and 8b are pivoted on oscillating arms 9a and 9b, which are hinged to the lower portion 3 and are assisted in their oscillation by hydraulic jacks 10a and 10b, which in practice constitute the lifting means.

The two wheels 8a and 8b are also adapted to be actuated by means of a pair of hydraulic motors, not shown in the drawings, for facilitating the advancement of the grape harvester 1.

The grape harvester 1 of the illustrated embodiment is adapted to be towed, however it is evident to the person skilled in the art, that the present grape harvester may also be made self-propelled.

For example, the grape harvester may be equipped with four wheels, of which at least two are driving wheels.

In any case, the upper portion 4 is articulated to the reservoir 20, which is conceived for the temporary storage of the harvested grapes and is adapted to discharge the load from the rear.

The reservoir 20 comprises a hermetic vat, which is substantially shaped like a hopper, preferably made of stainless steel, and operated by means of a hydraulic jack 11.

Three screw feeders 21 are fitted longitudinally inside the reservoir 20 and are used to distribute and level the received grapes.

According to the invention, the picking assembly 100 comprises a shaking system comprising a plurality of oscillating radial shakers 110, which are rotatably associated with one or more shafts 120, turned by motor means.

Preferably, the grape harvester 1 is equipped with three shafts 120 which are substantially mutually parallel.

While the rotation axis 1200 of each shaft 120 is transverse to the advancement direction of the grape harvester 1, the rotation axis 1100 of each shaker 110 traces, during the rotation of the shaft 120 with which it is associated, the surface of an imaginary cone whose vertex lies on the rotation axis 1200.

In other words, during the rotation of the shafts 120, the radial shakers 110, in addition to rotating freely, oscillate on planes which are transverse to the rotation axes 1200, with a movement that can be likened to a precession motion.

In detail, each shaker 110 is composed of a base body 111, which is substantially annular and acts as a support for a plurality of rod members 112 which are arranged radially.

Advantageously, the rod members 112 are made of a material that is substantially elastic and is suitable for food use.

The rod members 112 can have any dimension and cross-section and have a more or less conspicuous rounding at their free end.

Each base body 111 can freely rotate on a collar 130 which is fastened to its shaft 120 by a fastener, constituted for example by a grub screw 133.

The collar 130, which in practice determines the oscillating motion of the radial shaker 110, is constituted by a substantially cylindrical body.

The cylindrical body has a through hole 131, which is adapted to accommodate a shaft 120, and a circumferential seat 132.

The axis 1310 of the through hole 131 is transverse to the axis 1300 of the collar 130.

The axis of symmetry of the circumferential seat 132 substantially coincides with the axis 1300.

In practice, when the collar 130 is inserted in the shaft 120, the axis 1300 is transverse to the rotation axis 1200.

Preferably, the angle α, formed between the axis 1300 and the axis 1310, is about 12°. The angle α may also have a wider range.

Preferably, the base bodies 111 comprise a central element 113, which is substantially annular and is mounted on the collar 130 by means of a bearing 140, which is accommodated in the circumferential seat 132.

The bearing 140 is locked in the correct position by a first flange 114 and by a second flange 115 which are removably fastened to the central element 113.

Multiple radially arranged receptacles 116, adapted to accommodate the rod members 112, are provided in the central element 113.

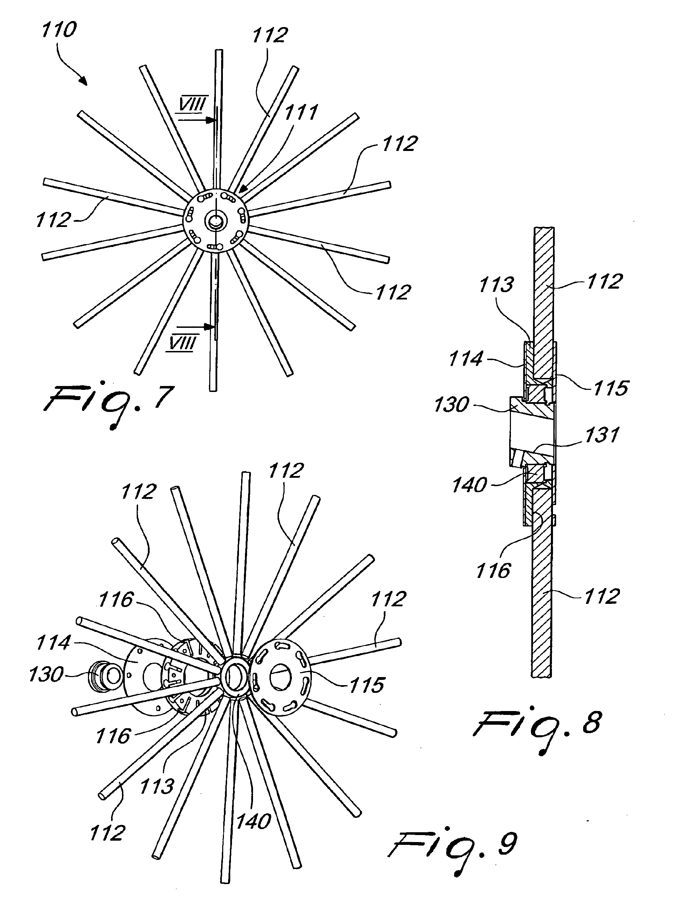

Preferably, as visible in Figure 9, the receptacles 116 partially open onto a face of the central element 113. In this manner, the second flange 115 can removably fasten the rod members 112 by mechanical interference.

If one or more rod members 112 have to be replaced, it is sufficient to loosen the second flange 115 and extract the members to be replaced.

The number of radial shakers 110 installed, and their relative distance, vary as a function of the length of each shaft 120, of the length of the rod members 112 and of the angle α.

Preferably, those parameters are managed so that the radial shakers 110 of each shaft 120 completely cover the picking span during the rotation of the shaft 120.

The shafts 120 are turned by motor means which, in the illustrated example, are constituted by a hydraulic motor 150 and by an adapted mechanism.

Preferably, the mechanism comprises a pinion 151, which is keyed onto the shaft of the motor 150, and three rings 152, which are keyed onto the shafts 120 and are interconnected by means of chains 153 which are tensioned by tension elements 154.

The picking assembly 100 also comprises a screening device 160 which is arranged below the radial shakers 110.

The screening device 160 comprises a moving belt 161, which is tensioned and rotated by a traction roller 164 and by a free roller 165.

The moving belt 161 is provided with a plurality of calibrated openings 162 formed substantially on its entire surface.

The calibrated openings 162 are conceived to allow the grapes and must to pass in the region below the moving belt 161 and to block the passage of bunches and leaves.

The moving belt 161 is preferably supported by three supporting straps 163 which are stretched between the traction roller 164 and the free roller 165 and are interposed between the rollers and the moving belt 161.

A device 170 for expelling foreign objects is arranged substantially at the end of the moving belt 161.

The device 170 comprises three suction units 171 which clear the moving belt 161 of the leaves and other impurities. The suction units 171 are sized and adjusted so as not to remove grapes and must.

Each suction unit 171 comprises an impeller 172 which is partially open and rotates within an enclosure 176, which is generally shaped like a volute.

The enclosure 176 is provided with an intake port 177, which opens just above the moving belt 161, and with a discharge port 178, which opens behind the grape harvester 1.

The impeller 172 comprises vanes 173 fastened to a disk base 175 which is preferably associated with a motor 179 adapted to operate the suction unit 171.

A generally cylindrical compartment 174 is formed on the face of the base 175, that lies opposite the one from which the vanes 173 protrude, and is sized so as to internally accommodate the motor 179, making it lie flush with the enclosure 176.

The expulsion device 170 is provided with a branch shredder, which is not shown in the figures, and is constituted essentially by one or more blades which are applied to the free end of the vanes 173.

The movement of the various working elements of the hydraulic type that equip the grape harvester 1 is ensured by an adapted hydraulic circuit, which may be of a per se known type and will not be described herein.

The operation of the grape harvester according to the invention is evident from what has been described and illustrated: the picking assembly 100 acts on the bunches, causing the separation of the berries from the rachis, leaving the rachis on the plant.

More particularly, during the advancement of the grape harvester 1, the combined action of the movements that characterize the radial shakers 110, which are free to rotate and oscillate on planes which are transverse to the rotation axes 1200 of each shaft 120, causes a direct beating action on the grapes, causing their separation but preserving their integrity.

The three radial shakers 110 allow to reach even the bunches that are badly located or arranged above the grid of metal supporting wires.

The grapes detached by the radial shakers 110 are gathered by the screening device 160, from which they fall directly into the reservoir 20, where they remain until the subsequent emptying.

In the reservoir 20, the grapes are distributed and leveled by the screw feeders 21, which prevent undesirable localized accumulations.

Any bunches and leaves, that might be present on the moving belt 161, are conveyed toward the rear of the grape harvester 1, where the expulsion device 170 allows them to fall to the ground.

In practice it has been found that the grape harvester, particularly for picking grapes from pergola or tendone trellis, according to the invention, fully achieves the intended aim, by minimizing the picking loss while at the same time preserving the integrity and quality of the grapes.

Also, the grape harvester according to the invention respects both the shoots and their supporting structures while significantly shortening the product picking times.

The picking assembly and the shakers of the grape harvester according to the invention are particularly effective both for cultivations in which the plants are arranged on a roof which is inclined upwards by approximately 25-30°, as in the Trento pergola, and for other cultivation systems, such as GDC, Guyot and Cordon.

This application claims the priority of Italian Patent Application No. VI2011A000063, filed on March 22, 2011.

## Claims

1. A grape harvester, particularly for picking grapes from pergola or tendone trellis, comprising a chassis (**2**) which supports a picking assembly (**100**) arranged substantially above a reservoir (**20**) for receiving the individual grapes; a plurality of radially arranged oscillating shaking units (**110**) being rotatably associated with at least one shaft (**120**) which is rotated by motor means; the rotation axis (**1200**) of said shaft (**120**) **being** transverse to the advancement direction of said grape harvester (**1**); **said grape harvester being characterized in that** each one of said radial shaking units (**110**) **has a rotation axis (1100) that** traces the surface of an imaginary cone, during the rotation of said shaft (**120**).

2. The grape harvester according to claim 1, **characterized in that** each of said radial shaking units (**110**) comprises a substantially annular base body (**111**); said base body (**111**) supports a plurality of substantially elastic rod members (**112**) which are arranged radially; said base body (**111**) can rotate freely on a collar (**130**) fastened to said shaft (**120**).

3. The grape harvester according to claim 2, **characterized in that** said collar (**130**) comprises a substantially cylindrical body provided with a circumferential seat (**132**) and with a through hole (**131**) adapted to accommodate said shaft (**120**); **said circumferential seat (132) having an** axis of symmetry (**1300**) that substantially **coincides with** the axis of said collar (**130**); **said through hole (131) having a** longitudinal axis (**1310**) that is transverse to the axis (**1300**) of said collar (**130**).

4. The grape harvester according to claim 3, **characterized in that** said base body (**111**) comprises a substantially annular central element (**113**), which is interconnected to said collar (**130**) by means of a bearing (**140**) which is locked by a first flange (**114**) and by a second flange (**115**), said first and second flanges (**114**, **115**) are detachably fastened to said central element (**113**); said bearing (**140**) is accommodated in said circumferential seat (**132**).

5. The grape harvester according to claim 4, **characterized in that** said central element (**113**) comprises a plurality of radially formed receptacles (**116**); said receptacles (**116**) accommodate said rod members (**112**); said second flange (**115**) removably locks said rod members (**112**) in said receptacles (**116**).

6. The grape harvester according to claim 5, **characterized in that** each of said rod members (**112**) comprises a rounded free end; said free end is opposite to the end inserted in said receptacles.

7. The grape harvester according to one claim 1, **characterized in that** said picking assembly (**100**) comprises a screening device (**160**) located below said shaking units (**110**); said screening device (**160**) comprises a moving belt (**161**), which is tensioned and turned by at least two rollers (**164**, **165**); said moving belt (**161**) is provided with a plurality of calibrated openings (**162**) formed substantially along its entire surface; said calibrated openings (**162**) allow the passage, into the region below said moving belt (**161**), of grapes and must and does not allow the passage of bunches and leaves.

8. The grape harvester according to claim 7, **characterized in that** said screening device (**160**) comprises at least two supporting straps (**163**), which are stretched between said two rollers (**164, 165**); said supporting straps (**163**) are interposed between said moving belt (**161**) and said rollers (**164, 165**).

9. The grape harvester according to claim 7, **characterized in that** said picking assembly (**100**) comprises an expulsion device (**170**) for expelling foreign objects; said expulsion device (**170**) is arranged at the end of said moving belt (**161**); said expulsion device (**170**) comprises at least one suction unit (**171**), which is.provided with a partially open impeller (**172**) which rotates inside a substantially volute-shaped enclosure (**176**); said enclosure (**176**) is provided with an intake port (**117**), which opens above said moving belt (**161**); said enclosure (**176**) is provided with a discharge port (**178**), which opens to the rear of said harvesting machine (**1**).

10. The grape harvester according to claim 9, **characterized in that** said impeller (**172**) comprises a plurality of vanes (**173**) fastened to a disk base (**175**) associated with a motor (**179**) adapted to turn said impeller (**172**); said disk base (**175**) forms a substantially cylindrical compartment (**174**), on the opposite side with respect to said vanes (**173**), said substantially cylindrical compartment (**174**) accommodates said motor (**179**); said motor (**179**) is flush with said enclosure (**176**).

11. The grape harvester according to claim 10, **characterized in that** said expulsion device (**170**) comprises a branch shredder; said branch shredder comprises at least one blade applied to the free end of said vanes (**173**).

12. The grape harvester according to claim 1, **characterized in that** said reservoir (**20**) comprises at least one screw feeder (**21**) which is arranged longitudinally; said screw feeder (**21**) is adapted to distribute and level the grapes received by said reservoir (**20**).

13. The grape harvester according to claim 1, **characterized in that** said chassis (**2**) comprises a lower portion (**3**) which is joined to an upper portion (**4**) by means of a pantograph lifting device (**5**); said lower portion (**3**) is provided with advancement means (**7**); said upper portion (**4**) is articulated to said reservoir (**20**); said reservoir (**20**) can be tipped and is adapted for rear discharge.

14. The grape harvester according to claim 13, **characterized in that** said advancement means comprises at least one drawbar (**7**), which is located at the front of said grape harvester (**1**), and at least one pair of free wheels (**8a**, **8b**), which are mounted below said chassis (**2**).

15. The grape harvester according to claim 13, **characterized in that** said wheels (**8a**, **8b**) comprise lifting means in order to keep said picking assembly substantially parallel to the productive span of the vineyard; said lifting means are composed essentially of a pair of hydraulic jacks (**10a**, **10b**) which interact with said wheels (**8a**, **8b**).

16. The grape harvester according to claim **13**, **characterized in that** said lifting means comprises at least one pair of wheels (**8a**, **8b**) actuated by hydraulic motors.

## Patentansprüche

1. Eine Traubenerntemaschine, insbesondere zur Aufnahme von Trauben aus Pergola- oder Rankgitteranbau, die Folgendes umfasst: ein Gestell (2), das einen Pflückaufbau (100) trägt, der im Wesentlichen oberhalb eines Behälters (20) zur Aufnahme der einzelnen Trauben angeordnet ist, eine Vielzahl von radial angeordneten oszillierenden Schütteleinheiten (110), die drehbar mit mindestens einer Welle (120) verbunden sind, welche von Motormitteln gedreht wird, wobei die Drehachse (1200) der Welle (120) transversal zur Vorschubrichtung der Traubenerntemaschine (1) ist, wobei die Traubenerntemaschine **dadurch gekennzeichnet ist, dass** jede der radialen Schütteleinheiten (110) eine Drehachse (1100) hat, die während der Drehung der Welle (120) der Oberfläche eines imaginären Kegels folgt.

2. Die Traubenerntemaschine gemäß Anspruch 1, **dadurch gekennzeichnet, dass** jede der radialen Schütteleinheiten (110) einen im Wesentlichen ringförmigen Grundkörper (111) umfasst; wobei der Grundkörper (111) eine Vielzahl von im Wesentlichen elastischen Stabgliedern (112) trägt, die radial angeordnet sind; wobei der Grundkörper (111) sich frei auf einem Ring (130) drehen kann, der an der Welle (120) befestigt ist.

3. Die Traubenerntemaschine gemäß Anspruch 2, **dadurch gekennzeichnet, dass** der Ring (130) einen im Wesentlichen zylindrischen Körper umfasst, der mit einem umlaufenden Sitz (132) und mit einer durchgehenden Bohrung (131) ausgestattet ist, die ausgebildet ist, um die Welle (120) aufzunehmen, wobei der umlaufende Sitz (132) eine Symmetrieachse (1300) hat, die im Wesentlichen mit der Achse des Rings (130) zusammenfallt, und wobei die durchgehende Bohrung (131) eine Längsachse (1310) hat, die transversal zur Achse (1300) des Rings (130) ist.

4. Die Traubenerntemaschine gemäß Anspruch 3, **dadurch gekennzeichnet, dass** der Grundkörper (111) ein im Wesentlichen ringförmige zentrales Element (113) umfasst, das mit dem Ring (130) über ein Lager (140) verbunden ist, welches durch einen ersten Flansch (114) und einen zweiten Flansch (115) verriegelt wird; wobei der erste und der zweite Flansch (114, 115) lösbar an dem zentralen Element (113) befestigt sind; wobei das Lager (140) in dem umlaufenden Sitz (132) untergebracht ist.

5. Die Traubenerntemaschine gemäß Anspruch 4, **dadurch gekennzeichnet, dass** das zentrale Element (113) eine Vielzahl von radial geformten Sitzen (116) umfasst; wobei die Sitze (116) die Stabglieder (112) aufnehmen; wobei der zweite Flansch (115) die Stabglieder (112) lösbar in den Sitzen (116) blockiert.

6. Die Traubenerntemaschine gemäß Anspruch 5, dadurch gekennzeichnen, dass jedes der Stabglieder (112) ein gerundetes freies Ende umfasst; wobei das freie Ende gegenüber dem Ende liegt, das in die Sitze eingeführt ist.

7. Die Traubenerntemaschine gemäß Anspruch 1, **dadurch gekennzeichnet, dass** der Pflückaufbau (100) eine Sortiervorrichtung (160) umfasst, die sich unterhalb der Schütteleinheiten (110) befindet; wobei die Sortiervorrichtung (160) ein Förderband (161) umfasst, das von mindestens zwei Rollen (164, 165) gespannt und gedreht wird; wobei das Förderband (161) mit einer Vielzahl von kalibirierten Öffnungen (162) versehen ist, die im Wesentlichen entlang seiner gesamten Oberfläche geformt sind; wobei die kalibrierten Öffnungen (162) das Eindringen von Tauben und Most in den Bereich unterhalb des Förderbandes (161) erlauben und das Eindringen von Büscheln und Blättern nicht erlauben.

8. Die Traubenerntemaschine gemäß Anspruch 7, **dadurch gekennzeichnet, dass** die Sortiervorrichtung (160) mindestens zwei Tragriemen (163) umfasst, die zwischen den zwei Rollen (164, 165) gespannt sind; wobei die Tragriemen (163) zwischen dem Förderband (161) und den Rollen (164, 165) angeordnet sind.

9. Die Traubenerntemaschine gemäß Anspruch 7, dadurch gekennzeichnen, dass der Pflückaufbau (100) eine Ausstoßvorrichtung (170) zum Ausstoßen von Fremdkörpern umfasst; wobei die Ausstoßvorrichtung (170) am Ende des Förderbandes (161) angeordnet ist; wobei die Ausstoßvorrichtung (170) mindestens eine Saugeinheit (171) umfasst, die mit einem teilsweise offenen Gebläserad (172) ausgestattet ist, das sich in einem im Wesentlichten schneckenförmigen Gehäuse (176) dreht; wobei das Gehäuse (176) mit einer Einlassöffnung (177) versehen ist, die sich über dem Förderband (161) öffnet; wobei das Gehäuse (176) mit einer Auslassöffnung (178) versehen ist, die sich zum hinteren Ende der Traubenerntemaschine (1) hin öffnet.

10. Die Traubenerntemaschine gemäß Anspruch 9, **dadurch gekennzeichnet, dass** das Gebläserad (172) eine Vielzahl von Radschaufeln (173) umfasst, die an einer Grundscheibe (175) befestigt sid, die mit einem Motor (179) verbunden ist, der ausgebildet ist, um das Gebläserad (172) zu drehen; wobei die Grundscheibe (175) eine im Wesentlichen zylindrische Vertiefung (174) auf der Seite bildet, die den Radschaufeln (173) gegenüberliegt; wobei die im Wesentlichen zylinderische vertiefung (174) den Motor (179) aufnimmt; wobei der Motor (179) bündig mit dem Gehäuse (176) ist.

11. Die Traubenerntemaschine gemäß Anspruch 10, **dadurch gekennzeichnet, dass** die Ausstoßvorrichtung (170) einen ZweiSchredder umfasst; wobei der Zweig-Schredder mindestens eine Klinge umfasst, die am freien Ende der Schaufelräder (173) angebracht ist.

12. Die Traubenerntemaschine gemäß Anspruch 1, **dadurch gekennzeichnet, dass** der Behälter (20) mindestens einen Schneckenförderer (21) umfasst, der in Längsrichtung angeordnet ist; wobei der Schneckenförderer (21) ausgebildet ist, um die Trauben, die von dem Behälter (20) aufgenommen wurden, zu verteilen und zu ebnen.

13. Die Traubenerntemaschine gemäß Anspruch 1, **dadurch gekennzeichnet, dass** das Gestell (2) einen unteren. Abschnitt (3) umfasst, der über eine Pantograph-Hubvorrichtung (5) mit einem oberen Abschnitt (4) verbunden ist; wobei der untere Abschnitt (3) mit einem Beförderungsmittel (7) ausgestattet ist; wobei der obere Abschnitt (4) gelenkig mit dem Behälter (20) verbunden ist; wobei der Behälter (20) gekippt werden kann und geeignet für das Ablagen nach hinten ist.

14. Die Traubenerntemaschine gemäß Anspruch 13, **dadurch gekennzeichnet, dass** das Beförderungsmittel mindestens eine Zugstange (7) umfasst, die sich am vorderen Ende der Traubenerntemaschine (1) befindet, und mindestens ein Paar freier Räder (8a, 8b), die unter dem Gestell (2) montiert sind.

15. Die Traubenerntemaschine gemäß Anspruch 13, **dadurch gekennzeichnet, dass** die Räder (8a, 8b) ein Hubmittel umfassen, um den Pflückaufbau im Wesentlichen parallel zur produktiven Bereich des Weinbergs zu halten; wobei die Hubmittel im Wesentlichen aus einem Paar von hydraulischen Hebern (10a, 10b) bestehen, die mit den Rädern (8a, 8b) zusammenwirken.

16. Die Traubenerntemaschine gemäß Anspruch 13, **dadurch gekennzeichnet, dass** das Hubmittel mindestens ein Paar von Radern (8a, 8b) umfasst, die von Hydraulikmotoren betätigt werden.

## Revendications

1. Machine de récolte de raisin, particulièrement pour cueillir du raisin d'une pergola ou d'un treille, comprenant un châssis (2) qui supporte un montage de récolte (100) agencé essentiellement au-dessus d'un réservoir (20) pour recevoir les raisins individuels ; une pluralité d'unités à secousses vibrantes (110) agencées radialement, liées en rotation avec au moins un arbre (120) qui est tourné par un moyen de moteur ; l'axe de rotation (1200) de l'arbre (120) étant transversal au sens d'avancement de la machine de récolte de raisin (1) ; la machine de récolte de raisin étant **caractérisée en ce que** chacune des unités à secousses radiales (110) présente un axe de rotation (1100) qui trace la surface d'un cône imaginaire, pendant la rotation de l'arbre (120).

2. Machine de récolte de raisin selon la revendication 1, **caractérisée en ce que** chacune des unités à secousses radiales (110) comprend un corps de base essentiellement annulaire (111) ; le corps de base (111) supporte une pluralité d'éléments de tige essentiellement élastiques (112) qui sont agencés radialement ; le corps de base (111) peut tourner librement sur un collier (130) fixé à l'arbre (120).

3. Machine de récolte de raisin selon la revendication 2, **caractérisée en ce que** le collier (130) comprend un corps essentiellement cylindrique prévu avec un singe circonférentiel (132) et un trou traversant (131) adapté pour recevoir l'arbre (120) ; le siège circonférentiel (132) présentant un axe de symétrie (1300) qui coïncide essentiellement avec l'axe du collier (130) ; le trou traversant (131) présentant un axe longitudinal (1310) qui est transversal à l'axe (1300) du collier (130).

4. Machine de récolte de raisin selon la revendication 3, **caractérisée en ce que** le corps de base (111) comprend un élément central essentiellement annulaire (113) qui est interconnecté au collier (130) au moyen d'un palier (140) qui est verrouillé par une première bride (114) et une seconde bride (115), les première et seconde brides (114, 115) sont fixées de façon séparable à l'élément central (113) ; le palier (140) est logé dans le siège circonférentiel (132).

5. Machine de récolte de raisin selon la revendication 4, **caractérisée en ce que** l'élément central (113) comprend une pluralité de réceptacles formés radialement (116) ; les réceptacles (116) logeant les éléments de tige (112) ; la seconde bride (115) verrouille de façon séparable les éléments de tige (112) dans les réceptacles (116).

6. Machine de récolte de raisin selon la revendication 5, **caractérisée en ce que** chacun des éléments de tige (112) comprend une extrémité libre arrondie ; l'extrémité libre est opposée à l'extrémité insérée dans les réceptacles.

7. Machine de récolte de raisin selon la revendication 1, **caractérisée en ce que** le montage de récolte (100) comprend un dispositif de tamis (160) situé en-dessous des unités à secousse (110) ; le dispositif de tamis (160) comprend une courroie mobile (161) qui est tendue et tournée par au moins deux rouleaux (164, 165) ; la courroie mobile (161) est dotée d'une pluralité d'ouvertures calibrées (162) formées essentiellement le long de la totalité de sa surface ; les ouvertures calibrées (162) permettent le passage de raisins dans la zone en-dessous de la courroie mobile (161) et ne permettent pas et ne doivent pas permettre le passage de grappes et de feuilles.

8. Machine de récolte de raisin selon la revendication 7, **caractérisée en ce que** le dispositif de tamis (160) comprend au moins deux courroies de support (163) qui sont étendues entre les deux rouleaux (164, 165) ; les courroies de support (163) sont intercalées entre la courroie mobile (161) et les rouleaux (164, 165).

9. Machine de récolte de raisin selon la revendication 7, **caractérisée en ce que** le montage de récolte (100) comprend un dispositif d'expulsion (170) pour expulser des objets étrangers ; le dispositif d'expulsion (170) est agencé à l'extrémité de la courroie mobile (161) ; le dispositif d'expulsion (170) comprend au moins une unité aspirante (171) qui est dotée d'une hélice partiellement ouverte (172) qui tourne à l'intérieur d'une enceinte essentiellement en forme de volute (176) ; l'enceinte (176) est dotée d'un port d'entrée (177) qui ouvre au-dessus de la courroie mobile (161) ; l'enceinte (176) est dotée d'un port de décharge (178) qui ouvre à l'arrière de la machine de récolte (1).

10. Machine de récolte de raisin selon la revendication 9, **caractérisée en ce que** l'hélice (172) comprend une pluralité d'ailettes (173) fixées à une base de disque (175) associée à un moteur (179) adaptée pour faire tourner l'hélice (172) ; la base de disque (175) forme un compartiment essentiellement cylindrique (174), sur le côté opposé par rapport aux ailettes (173), le compartiment essentiellement cylindrique (174) reçoit le moteur (179), le moteur (179) affleure avec l'enceinte (176).

11. Machine de récolte de raisin selon la revendication 10, **caractérisée en ce que** le dispositif d'expulsion (170) comprend un broyeur de branches ; le broyeur de branches comprend au moins une lame appliquée sur l'extrémité libre des ailettes (173).

12. Machine de récolte de raisin selon la revendication 1, **caractérisée en ce que** le réservoir (20) comprend au moins une alimentation à vis (21) qui est agencée longitudinalement ; l'alimentation à vis (21) est adaptée pour distribuer et mettre à niveau les raisins reçus par le réservoir (20).

13. Machine de récolte de raisin selon la revendication 1, **caractérisée en ce que** le châssis (2) comprend une partie inférieure (3) qui est jointe à une partie supérieure (4) au moyen d'un dispositif de levage à pantographe (5) ; la partie inférieure (3) est dotée d'un moyen d'avancement (7) ; la partie supérieure (4) est articulée sur le réservoir (20) ; le réservoir (20) peut être basculé et est adapté pour la décharge par l'arrière.

14. Machine de récolte de raisin selon la revendication 13, **caractérisée en ce que** le moyen d'avancement comprend au moins une barre d'attelage (7) qui est placée à l'avant de la machine de récolte (1) et au moins une paire de roues libres (8a, 8b) qui sont montées en-dessous du châssis (2).

15. Machine de récolte de raisin selon la revendication 13, **caractérisée en ce que** les roues fibres (8a, 8b) comprennent un moyen de levage afin de maintenir le montage de récolte essentiellement parallèle à la l'étendue de production du vignoble ; le moyen de levage est composé essentiellement d'une paire de vérins hydrauliques (10a, 10b) qui interagissent avec les roues (8a, 8b).

16. Machine de récolte de raisin selon la revendication 13, **caractérisée en ce que** le moyen de levage comprend au moins une paire de roues (8a, 8b) actionnées par des moteurs hydrauliques.
